# EUROPÄISCHE PATENTSCHRIFT

(11) **EP 2 727 554 B1**
(45) Veröffentlichungstag und Bekanntmachung des Hinweises auf die Patenterteilung: **07.03.2018**
(21) Anmeldenummer: 13191135.6
(22) Anmeldetag: 31.10.2013
(51) Int. Cl.: A61C 7/36, A61C 7/14

(54) **Kieferorthopädische Vorrichtung zur Vorverlagerung des Unterkiefers**
Oral orthopedic device for forward displacement of the lower jaw
Dispositif orthopédique pour le déplacement vers l'avant de la mâchoire inférieure

(30) Priorität: 02.11.2012 DE 102012220054
(43) Veröffentlichungstag der Anmeldung: 07.05.2014
(73) Patentinhaber: DW LINGUAL SYSTEMS GMBH, 49152 Bad Essen (DE)
(72) Erfinder: Wiechmann, Dirk, 49152 Bad Essen (DE)
(74) Vertreter: Taruttis, Stefan Georg

(56) Entgegenhaltungen:
- FR-A1- 2 935 261
- US-A- 6 162 051
- US-A1- 2010 285 422

## Beschreibung

Die Erfindung betrifft eine kieferorthopädische Vorrichtung zur Vorverlagerung des Unterkiefers eines Patienten mit zwei Teleskopen, welche jeweils ein Teleskoprohr und eine Teleskopgleitstange umfassen und welche mit ihren freien Enden jeweils über eine Gelenkverbindung an den Zähnen des Ober- bzw. Unterkiefers des Patienten befestigbar sind, wobei jede Gelenkverbindung ein Teleskoplager, ein Zahnlager und ein Koppelglied zur Verbindung der beiden umfasst. Eine derartige Vorrichtung wird auch Herbst-Scharnier genannt.

Ein derartiges Herbst-Scharnier kann bspw. wie folgt verwendet werden: Sowohl im Oberwie auch im Unterkiefer (OK bzw. UK) werden auf jeder Gesichtsseite (linke und rechte Seite) jeweils mehrere Zähne durch um diese umlaufende Bänder zu einem Block zusammen gefasst ("geblockt"). An jedem Block wird ein Hook befestigt, wodurch vier Hooks zur Verfügung stehen (einer im OK rechts, einer im OK links, einer im UK rechts und einer im UK links). An jedem Hook wird ein freies Ende eines Teleskops befestigt. Dadurch, dass in jedem Teleskop die Teleskopgleitstange in dem Teleskoprohr distal anschlägt, wird eine Kraft von dem ortsfesten Oberkiefer auf den beweglichen Unterkiefer ausgeübt, wodurch dieser nach vorne (in Richtung positiver Sagittalachse) verlagert wird.
Ein Nachteil einer Behandlung mit einem Herbst-Scharnier auf diese Weise ist, dass sie nicht parallel zur Behandlung mit einer festsitzenden Klammer erfolgen kann:

Für die kieferorthopädische Behandlung von Patienten mit festsitzenden Klammern werden Brackets auf die zu behandelnden Zähne des Patienten geklebt und durch einen kieferorthopädischen Draht miteinander verbunden. Die Brackets weisen ein Pad zur Verbindung mit dem Zahn und einen Bracketbody auf, der den Drahtbogen aufnimmt.

Die umlaufenden Bänder des Herbst-Scharniers behindern bzw. verhindern die Befestigung von Brackets an den Zähnen und umgekehrt, weshalb die Behandlung nicht parallel erfolgen kann.

Es ist jedoch wünschenswert, dass die Behandlung mit dem Herbst-Scharnier parallel zu der Behandlung mit der festsitzenden Klammer erfolgt, um Nebenwirkungen so gering wie möglich zu halten.

Um die Behandlung mit einem Herbst-Scharnier parallel zur Behandlung mit einer vestibulären bzw. bukkalen festsitzenden Klammer zu ermöglichen, wird wie folgt vorgegangen: Die Teleskope weisen an ihren freien Enden Ösen auf, um mit diesen eine Gelenkverbindung mit den Kiefern herzustellen. Der kieferorthopädische Draht der festsitzenden Klammer wird durch die Ösen geführt, um die Teleskope zu verankern. Mit anderen Worten trägt der kieferorthopädische Draht zwischen zwei Brackets eine Öse des Teleskops. Diese Verankerung erfolgt auf diese Weise mit allen vier Ösen der beiden Teleskope, wodurch das Herbst-Scharnier funktionsgerecht verankert ist.

Ein Nachteil dieser Variante ist, dass es im Verlauf der Behandlung mit dem Herbst-Scharnier häufig vorkommt, dass eine Öse der Teleskope oder auch ein Bracket abbricht. Da durch die Ösen der kieferorthopädische Draht verläuft, muss der Draht mindestens in dem betroffenen Bereich sowohl im Ober- wie auch im Unterkiefer gelöst werden, um das betroffene Teleskop auszutauschen. Anschließend müssen die Drähte wieder neu in die Brackets einligiert werden. Der Austausch eines Teleskops gestaltet sich dadurch recht aufwändig.

Die US 6,162,051 A beschreibt eine gattungsgemäße Anordnung einer Vorrichtung zur Vorverlagerung eines Kiefers mit einer festsitzenden Klammer. Die Vorrichtung zur Vorverlagerung weist eine federgespannte Kolben-Zylinder-Anordnung auf, die dadurch mit der festsitzenden Klammer verbunden ist, dass eines ihrer Enden gelenkig an dem Bogendraht der festsitzenden Klammer festgelegt ist und das andere Ende bevorzugt in einem Röhrchen eines Brackets, das in einem Slot auch den Bogendraht hält.
Die FR 2935261 A1 beschreibt eine Vorrichtung zur Vorverlagerung, deren Enden jeweils an einem Bogendraht einer am Ober- bzw. Unterkiefer angebrachten festsitzenden Klammer oder Schiene angelenkt sind.
Die US 2010/0285422 A1 zeigt eine Vorrichtung zur Vorverlagerung, die mit einer festsitzenden Klammer verbunden ist. Ein Ende der Vorrichtung zur Vorverlagerung ist mittels einer auf einen Zahn geklebten Vorrichtung festgelegt, die sich über labiale, okklusale und linguale Zahnflächen erstreckt, wobei die linguale Seite einen Bracketbody mit einem Slot für einen Bogendraht aufweisen kann. Das andere Ende der Vorrichtung ist mittels eines den Zahn vollständig umfassenden Bandes schwenkbar festgelegt. Dieses Band kann lingual einen Slot für einen Bogendraht aufweisen.

Aus der DE 198 37 555 A1 ist ein Herbst-Scharnier bekannt, das die Wahrscheinlichkeit des Abbrechens von Ösen reduziert: Zur Vergrößerung der Bewegungsfreiheit des Unterkiefers bei gleichzeitigem Erhalt des therapeutisch gewünschten Vorschubs des Unterkiefers wird erfindungsgemäß vorgeschlagen, dass die Teleskope im zusammengeschobenen Zustand starr sind (wie an sich bekannt), jedoch im ausgefahrenen Zustand flexibel sind. Dies wird bspw. dadurch erreicht, dass die Teleskopgleitstangen flexibel ausgebildet sind. Durch diese flexible Ausgestaltung führt nicht jede "Querbelastung oder Überbelastung" der Teleskope dazu, dass eine Öse abbricht.

Aufgabe der vorliegenden Erfindung ist es daher, auf einfache Weise die Behandlung einer gattungsgemäßen Vorrichtung parallel zur Behandlung mit einer festsitzenden Klammer zu ermöglichen.

Die Aufgabe wird erfindungsgemäß durch die Anordnung gemäß Anspruch 1 gelöst.

Eine erfindungsgemäße kieferorthopädische Vorrichtung zur Vorverlagerung des Unterkiefers eines Patienten weist zwei Teleskope auf, welche jeweils ein Teleskoprohr und eine Teleskopgleitstange umfassen und welche mit ihren freien Enden jeweils über eine Gelenkverbindung an den Zähnen des Ober- bzw. Unterkiefers des Patienten befestigbar sind. Jede Gelenkverbindung umfasst ein Zahnlager zur Verbindung mit den Zähnen. Das Zahnlager greift zur Befestigung an Zähnen des Ober- bzw. Unterkiefers ausschließlich an folgenden Zahnflächen an: mesiale, distale, bukkale und/oder okklusale Zahnfläche(n). Auf diese Weise ist sichergestellt, dass die kieferorthopädische Vorrichtung den lingualen Raum, d.h. sowohl die lingualen Zahnflächen von Zähnen des Ober- wie auch des Unterkiefers als auch den Zungenraum, nicht beeinträchtigt bzw. beeinflusst.

Die Zahnlager greifen bevorzugt zur Befestigung an Zähnen des Ober- bzw. Unterkiefers jeweils an mindestens einem Zahn und bevorzugt an mindestens zwei, insbesondere drei, Zähnen an.

Die Zahnlager greifen zur Befestigung an Zähnen des Ober- bzw. Unterkiefers vorteilhaft jeweils an mindestens einer und bevorzugt an mindestens zwei Zahnflächen eines jeweiligen Zahns an.

Die Zahnlager zur Befestigung an Zähnen des Ober- bzw. Unterkiefers greifen bevorzugt jeweils an mindestens einer bukkalen Zahnfläche und bevorzugt zusätzlich an mindestens einer mesialen und/oder distalen Zahnfläche eines jeweiligen Zahns an.

Jedes Zahnlager umfasst vorteilhaft mindestens ein Pad für mindestens einen Zahn, um eine mechanische Anbindung des Zahnlagers an den jeweiligen Zahn zu ermöglichen.

Das Zahnlager kann ein Pad zur Fixierung an mehreren Zähnen oder alternativ an mehreren Zähnen jeweils ein Pad, wobei die Pads untereinander mechanisch verbunden sind, aufweisen.

Vorteilhaft weist jede Gelenkverbindung ein Teleskoplager, ein Zahnlager und ein Koppelglied zur gegenseitigen Verbindung derselben auf.

In einem Ausführungsbeispiel umfasst bei mindestens einer Gelenkverbindung das Koppelglied ein gesondertes Bauteil, das das Teleskoplager zur Herstellung der Gelenkverbindung mit dem Zahnlager mechanisch verbindet.

In diesem Ausführungsbeispiel kann bei mindestens einer Gelenkverbindung das Koppelglied eine Schraube umfassen, die durch eine Teleskoplageröse in eine Mutter des zugehörigen Zahnlagers greift, um die Gelenkverbindung herzustellen.

In einem anderen Ausführungsbeispiel umfasst bei mindestens einer Gelenkverbindung das Koppelglied einen integral gebildeten Abschnitt des jeweiligen Zahnlagers oder Teleskoplagers, der zur Herstellung der Gelenkverbindung in einen Abschnitt des Teleskoplagers bzw. Zahnlagers steckbar ist.

In diesem Ausführungsbeispiel kann bei mindestens einer Gelenkverbindung das Teleskoplager eine Kugelkopfaufnahme und das Zahnlager einen Kugelkopfabschnitt, insbesondere auf einem stegartigen Kugelkopfvorsprung, derart aufweisen, dass zur Herstellung der Gelenkverbindung der Kugelkopfabschnitt lösbar in die Kugelkopfaufnahme steckbar ist.

Eine erfindungsgemäße Anordnung zur Behandlung eines Patienten umfasst eine kieferorthopädische Vorrichtung, wie zuvor beschrieben, die bukkal angeordnet ist und eine festsitzende Klammer, die lingual angeordnet ist. Da die kieferorthopädische Vorrichtung den Lingualraum unbeeinflusst lässt und die festsitzende Klammer lingual angeordnet ist, kommt es zu keiner Wechselwirkung zwischen der erfindungsgemäßen kieferorthopädischen Vorrichtung und der festsitzenden Klammer, wodurch die Behandlungen völlig unabhängig voneinander durchgeführt werden können. Auf diese Weise hat auch eine Fehlfunktion des einen, die kieferorthopädische Vorrichtung bzw. die festsitzende Klammer, keine Auswirkungen auf den anderen, die festsitzende Klammer bzw. die kieferorthopädische Vorrichtung.

Weitere Merkmale, Einzelheiten und Vorzüge der Erfindung ergeben sich aus den Ansprüchen und der nachfolgenden Beschreibung bevorzugter Ausführungsformen sowie anhand der Zeichnung. Es zeigen:
- Fig. 1: eine erste und zweite Seitenansicht (Fig. 1a und 1b), eine Draufsicht (Fig. 1c) und eine perspektivische Ansicht (Fig. 1d) eines Zahnlagerkoppelelements für ein UK-Zahnlager;
- Fig. 2: eine Ansicht von unten (Fig. 2a), eine erste und zweite Seitenansicht (Fig. 2b und 2c), eine Draufsicht (Fig. 2d) und eine perspektivische Ansicht (Fig. 2e) eines Zahnlagerkoppelelements für ein OK-Zahnlager;
- Fig. 3: eine rechte Seitenansicht eines Oberkiefers und eines zugehörigen Unterkiefers eines Patienten, wobei der UK ein Zahnlager mit dem Zahnlagerkoppelelement der Fig. 1 und der OK ein Zahnlager mit dem Zahnlagerkoppelelement der Fig. 2 aufweist;
- Fig. 4a: die Seitenansicht der Fig. 3, wobei die Zahnlager durch ein Teleskop miteinander verbunden sind;
- Fig. 4b: eine vergrößerte Querschnittsansicht durch die Gelenkverbindung der Fig. 4a, die am Oberkiefer gebildet ist,
- Fig. 5a: eine Schnittansicht durch ein Zahnlagerkoppelelement und zugehöriges Teleskoplager in einer alternativen Ausführung;
- Fig. 5b: eine rechte Seitenansicht eines Oberkiefers und eines zugehörigen Unterkiefers eines Patienten, wobei die Zahnlager jeweils Zahnlagerkoppelelemente gemäß der alternativen Ausführung aufweisen;
- Fig. 6a: eine Schnittansicht durch das Zahnlagerkoppelelement und das Teleskoplager der Fig. 5a, wobei das Teleskoplager auf das Zahnlagerkoppelelement gesteckt ist, und
- Fig. 6b: die Seitenansicht der Fig. 5b, wobei die Zahnlager durch ein Teleskop verbunden sind.

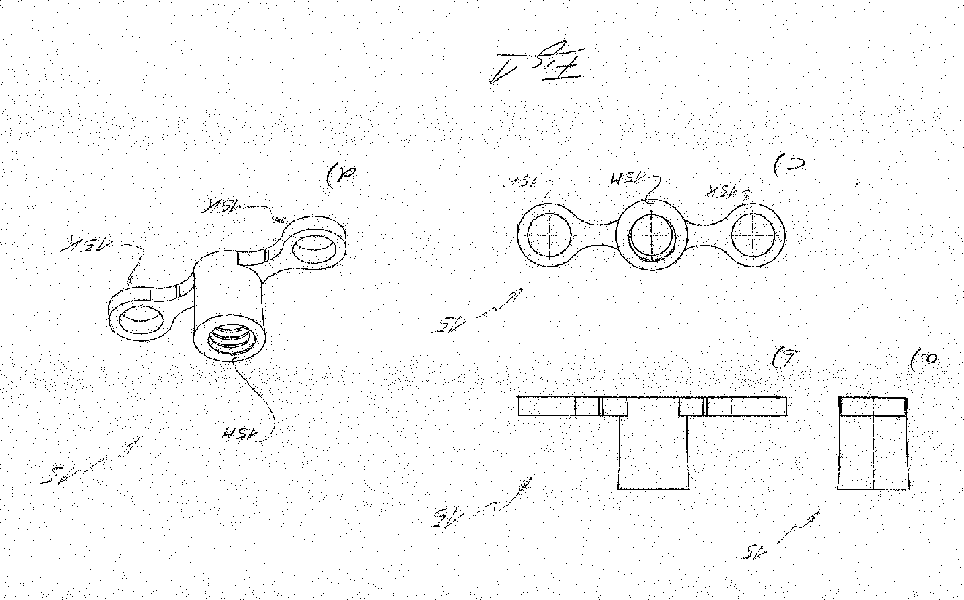

Fig. 1 zeigt in mehreren Ansichten ein Ankoppelglied 15 für UK-Zähne. Das Ankoppelglied 15 weist an gegenüberliegenden Enden Klebeösen 15K auf und zwischen diesen eine Mutter 15M. Das Ankoppelglied 15 besteht aus Kobalt-Chrom. Das Ankoppelglied ist für eine nachfolgende Verwendung wie folgt vorbehandelt: Im Bereich der Klebeösen 15K wird das Ankoppelglied 15 gesandstrahlt und anschließend ein Metal Primer aufgetragen. Der Metal Primer wird als Flüssigkeit aufgetragen und dient als chemischer Haftvermittler zwischen dem Metall des Ankoppelglieds 15 und einem darauf aufzutragenden Kunststoff, wie weiter unten beschrieben.

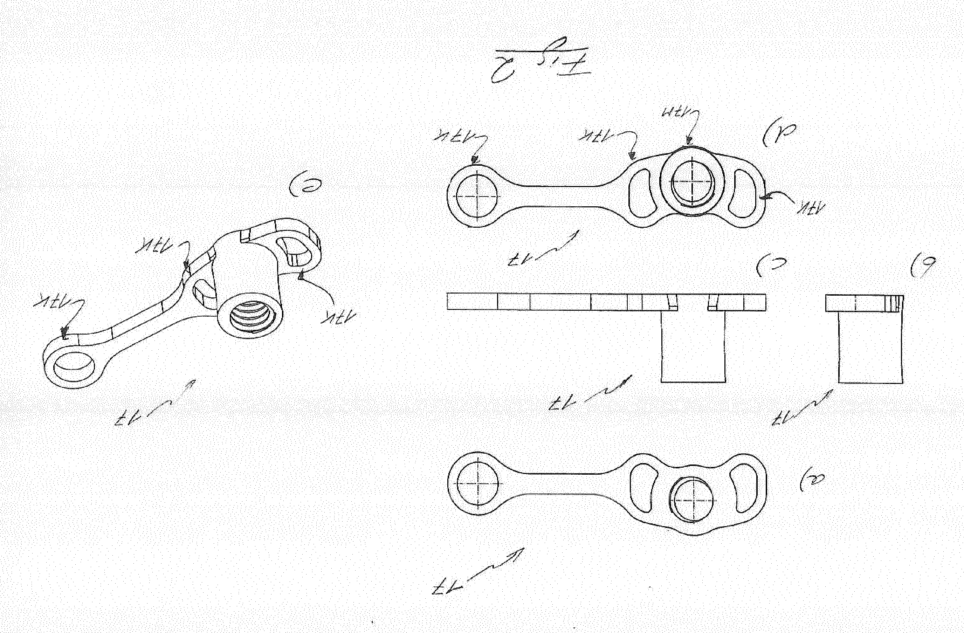

Fig. 2 zeigt mehrere Ansichten eines Ankoppelglieds 17 für OK-Zähne. Das Ankoppelglied 17 weist mehrere Klebeösen 17K auf und eine Mutter 17M. Das Ankoppelglied 17 besteht ebenfalls aus Kobalt-Chrom und ist auf dieselbe Weise vorbehandelt wie das Ankoppelglied 15: Außer im Bereich der Mutter 17M ist das Ankoppelglied 17 gesandstrahlt und mit einem Metal Primer versehen worden.

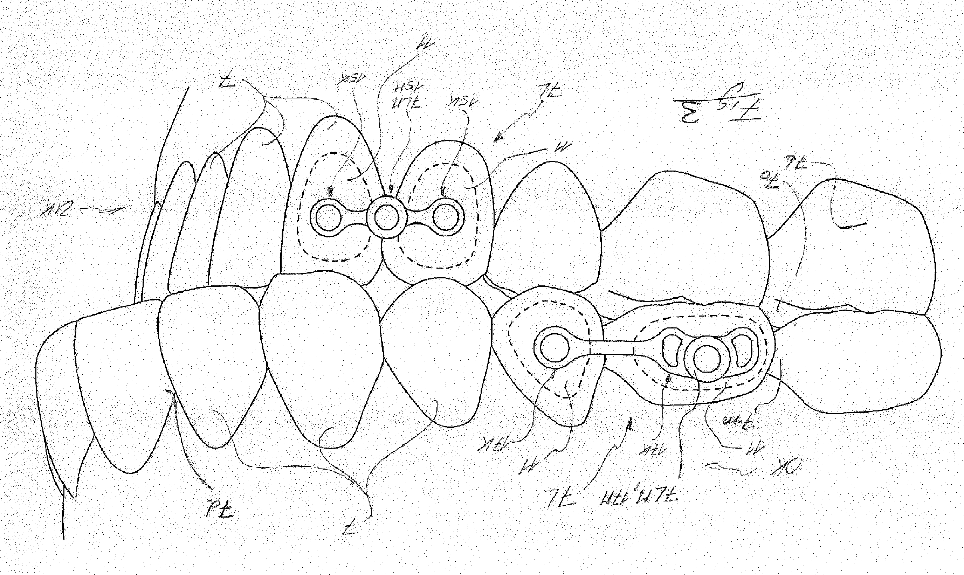

Fig. 3 zeigt die rechte Seitenansicht von Zähnen 7 eines Ober- und eines Unterkiefers OK, UK eines Patienten, wobei an Zähnen 15, 16 des OK das Ankoppelglied 17 und an den Zähnen 43, 44 des UK das Ankoppelglied 15 befestigt ist. Um die Ankoppelglieder 15, 17 an den Zähnen 7 zu befestigen, wurde wie folgt vorgegangen:

Die zur Befestigung vorgesehenen bukkalen Zahnflächen 7b der Zähne 7 sowie ggfls. mesiale und distale Zahnflächen werden zunächst gesandstrahlt und angeätzt, um die Oberfläche aufzurauen. Anschließend werden die Zähne mit Druckluft getrocknet. In Fig. 3 wurden die bukkalen Zahnflächen 7b der Zähne 15, 16, 43 und 44 auf diese Weise vorbereitet.

Nun sind die bukkalen Zahnflächen 7b und die Ankoppelglieder 15, 17 für die Verwendung vorbereitet und die Ankoppelglieder 15, 17 können mit den Zahnflächen verbunden werden.

Dazu wird die Kontur eines jeden Ankoppelglieds 15, 17 zunächst mittels einer Zange auf die Kontur der zugehörigen Zähne 43, 44 bzw. 15, 16 angepasst.

Anschließend wird eine dünne Kunststoffschicht eines lichthärtenden Kunststoffes auf die Zähne 43 und 44 aufgetragen und das Ankoppelglied 15 an die Zähne 43, 44 gedrückt. Nun wird weiterer Kunststoff aufgetragen, insbesondere in die Klebeösen 15K. Sind sowohl die Klebeösen 15K vollständig in Kunststoff gefasst als auch die bukkalen Zahnflächen 7b so großflächig wie möglich mit Kunststoff versehen, wodurch sich eine größtmögliche Klebefläche ergibt, wird der Kunststoff ausgehärtet, vorliegend durch die Bestrahlung mit Licht. Das Ankoppelglied 17 wird an den bukkalen Zahnflächen der Zähne 15 und 16 auf dieselbe Weise befestigt, wodurch sich die Ansicht der Fig. 3 ergibt.

An den Zähnen 43, 44 und 15, 16 ist somit jeweils ein Zahnlager 7L für eine Gelenkverbindung 5 gebildet: Jedes Zahnlager umfasst eine Mutter 7LM (die Mutter 15M bzw. 17M des jeweiligen Ankoppelgliedes 15, 17) und ein Pad 11 aus lichtgehärtetem Kunststoff zur Anbindung an die jeweiligen Zähne 7 und zum Halten des jeweiligen Ankoppelgliedes 15, 17.

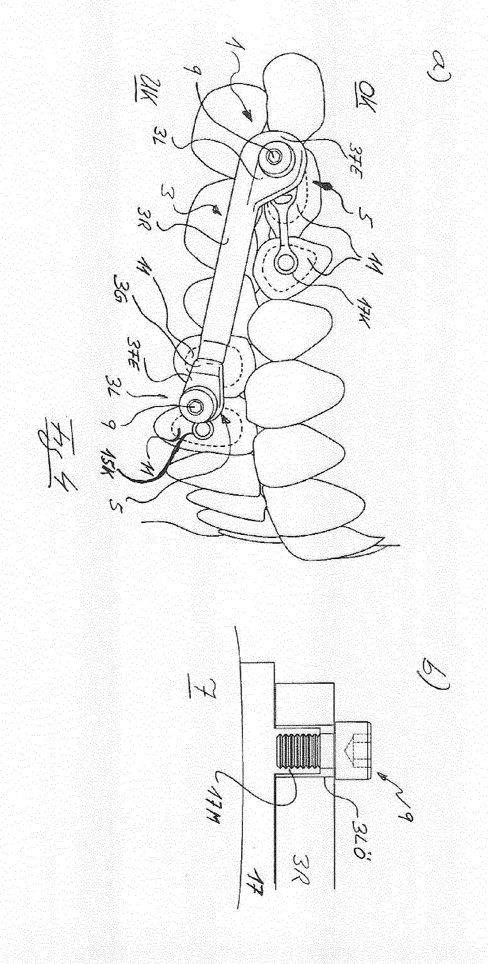

Fig. 4a zeigt ein Teleskop 3 mit einer Teleskopgleitstange 3G und einem Teleskoprohr 3R sowie gegenüberliegenden freien Enden 3FE, die jeweils ein Teleskoplager 3L mit einer Teleskoplageröse 3LÖ aufweisen.

Zur Bildung einer Gelenkverbindung 5 zwischen den freien Enden 3FE des Teleskops 3 und den Ankoppelgliedern 15, 17 ist ein Koppelglied 9, vorliegend eine Schraube, durch die jeweiligen Teleskoplagerösen 3LÖ in die zugehörigen Muttern 15M, 17M geschraubt.

Die im Oberkiefer gebildete Gelenkverbindung 5 der Fig. 4a ist in Fig. 4b in einer vergrößerten Querschnittsansicht dargestellt. Auf dem Zahn 7 ist das Ankoppelglied 17 befestigt, von dem die Mutter 17M mit einem Innengewinde vorsteht. Eine Lageröse 3LÖ des Teleskoprohres 3R ist auf die Mutter 17M aufgesteckt. Das Koppelglied 9 (eine Schraube) ist durch die Lageröse 3LÖ in dem Teleskoprohr 3R geführt und greift in die Mutter 17M, um das Teleskoprohr 3R an dem Ankoppelglied 17 zu befestigen.

Auf der gegenüberliegenden und nicht dargestellten linken Seite des OK und UK des Patienten findet sich die gleiche Anordnung wie in Fig.4a, jedoch spiegelsymmetrisch: Auf den Zähnen 25, 26 sowie 33, 34 sind ebenfalls Ankoppelglieder 17, 15 angeordnet, an denen jeweils ein freies Ende 3FE eines Teleskops mittels eines Koppelglieds 9, ebenfalls eine Schraube, befestigt ist.

Auf diese Weise ist eine kieferorthopädische Vorrichtung 1 zur Vorverlagerung des Unterkiefers eines Patienten gebildet, die ausschließlich an bukkalen Zahnflächen 7b von Zähnen 7 des OK und des UK eines Patienten befestigt ist. Eine Beeinflussung oder Beeinträchtigung des Lingualraums des Patienten erfolgt nicht.

In dem Lingualraum ist im OK und/oder dem UK des Patienten eine festsitzende linguale Klammer angeordnet, durch die eine kieferorthopädische Behandlung des Patienten erfolgt. Diese linguale festsitzende Klammer ist ausschließlich an lingualen Oberflächen der Zähne 7 befestigt, wodurch sich keine Wechselwirkung mit der kieferorthopädischen Vorrichtung 1 ergibt.

Auf diese Weise ist eine Anordnung bereitgestellt, die eine kieferorthopädische Vorrichtung 1 zur Vorverlagerung des Unterkiefers eines Patienten und eine festsitzende linguale Klammer im OK und/oder UK eines Patienten umfasst. Dadurch, dass die kieferorthopädische Vorrichtung 1 bukkal angeordnet ist und die festsitzende linguale Klammer lingual angeordnet ist, kommt es zu zwei physikalisch vollständig getrennten Apparaturen, so dass Änderungen, wie bspw. ein Teileaustausch oder Korrekturen, an der einen Apparatur vorgenommen werden können, ohne die andere Apparatur zu verändern bzw. zu beeinflussen.

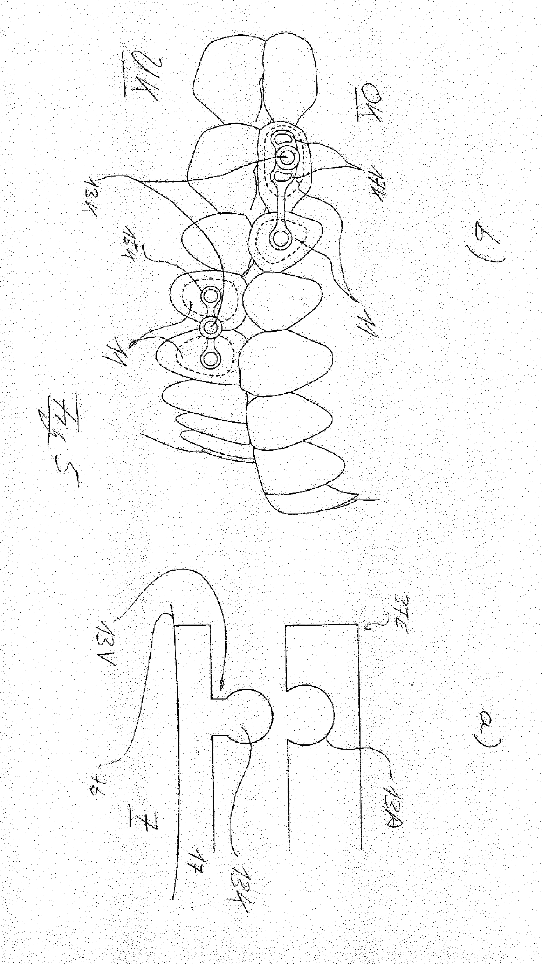

In einem alternativen Ausführungsbeispiel erfolgt die Herstellung einer Gelenkverbindung nicht über eine Teleskoplageröse 3LÖ, eine Schraube 9 und eine Mutter 15M, 17M, sondern über eine lösbare Rastverbindung mittels eines Kugelgelenks. Zu diesem Zweck wird die Mutter 15M, 17M des jeweiligen Ankoppelgliedes 15, 17 jeweils durch einen Kugelkopfvorsprung 13V und einen Kugelkopfabschnitt 13K ersetzt und die jeweilige Teleskoplageröse 3LÖ durch eine Kugelkopfaufnahme 13A ersetzt, s. Fig. 5a.

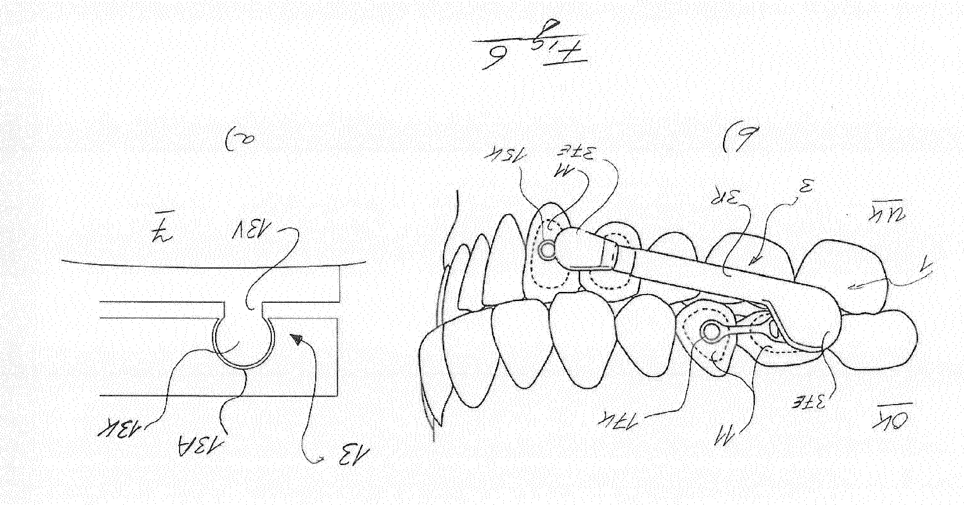

In Fig. 5a ist ein Zahn 7 mit einer bukkalen Zahnfläche 7b gezeigt, auf der ein Ankoppelglied 17 mittels lichtgehärtetem Kunststoff befestigt ist, wie zuvor beschrieben. An Stelle einer Mutter 17M ist jedoch ein Kugelkopfvorsprung 13V mit einem darauf angeordnetem Kugelkopfabschnitt 13K vorgesehen. Das freie Ende 3FE des Teleskops 3 weist eine zu dem Kugelkopfabschnitt 13K passende Kugelkopfaufnahme 13A auf. Fig. 5b zeigt eine Ansicht auf den entsprechend vorbereiteten Oberkiefer OK und Unterkiefer UK von der Seite. Zur Bildung eines Kugelgelenks 13 wird die Kugelkopfaufnahme 13A des Teleskops 3 auf den Kugelkopfabschnitt 13K des Zahnlagers 7L gesteckt. Fig. 6a zeigt die auf diese Weise gebildete Gelenkverbindung 13 in einer vergrößerten Querschnittsansicht, bei der die Kugelkopfaufnahme 13A den Kugelkopfabschnitt 13K umgreift. Fig. 6b zeigt in situ das auf die Kugelkopfabschnitte 13K gesteckte Teleskop 3. Durch die lösbare Aufnahme des Kugelkopfabschnitts 13K in der Kugelkopfaufnahme 13A ist eine lösbare Steckverbindung geschaffen, um ein schnelles Lösen und Befestigen des Teleskops 3 zu gewährleisten.

Die kieferorthopädische Vorrichtung 1 und die festsitzende linguale Klammer wurden bisher so beschrieben, dass sie ausschließlich an bukkalen bzw. lingualen Zahnflächen angreifen. Dies ist jedoch nicht zwingend. In einer Variante können zur Befestigung eines Ankoppelgliedes 15, 17 an Zähnen 7 auch Abschnitte von mesialen 7m und/oder distalen 7d und/oder okklusalen 7o Zahnflächen verwendet werden. In einer weiteren Variante können zur Befestigung von lingualen Brackets der lingualen festsitzenden Klammer nicht nur linguale Zahnflächen, sondern auch mesiale 7m und/oder distale 7d und/oder okklusale 7o Zahnflächen verwendet werden. Entscheidend ist dabei, dass sich die mechanischen Komponenten der kieferorthopädischen Vorrichtung 1 und der festsitzenden lingualen Klammer nicht überlappen bzw. in gegenseitigen Kontakt miteinander stehen, so dass die eine völlig unabhängig von der anderen ist.

Die Befestigung der Ankoppelglieder 15, 17 wurde oben so beschrieben, dass sie In-Situ beim Patienten erfolgt. Es ist jedoch auch möglich, die Befestigung der Ankoppelglieder 15, 17 durch einen Techniker vorbereiten zu lassen: Dazu werden Gipsmodelle gefertigt und die Kontur der Ankoppelglieder 15, 17 an die Zähne 7 angepasst. Anschließend werden die Ankoppelglieder gesandstrahlt, ein Metal Primer auf die Klebeösen 15K, 17K aufgetragen und die Pads 11 gebildet, wie zuvor beschrieben. Auf diese Weise können die Zahnlager 7L vorbereitet werden und später mit Hilfe eines Klebers eindeutig an Zähnen eines Patienten befestigt werden, weil es zu einem Formschluss zwischen den Zahnklebeflächen und den diesen zugewandten Padklebeflächen kommt.

Die Ankoppelglieder 15, 17 können allgemein aus einem Metall, bspw. rostfreiem Stahl, einer Metalllegierung, bspw. Kobalt-Chrom, oder aus Kunststoff bestehen.

Die Ankoppelglieder 15, 17 wurden vorliegend individuell an einzelne Zähne angepasst, indem die Kontur derselben an die Kontur der Zähne von Hand, bspw. mittels einer Zange, angepasst wurde. In einem alternativen Ausführungsbeispiel ist ein Satz Ankoppelglieder bereitgestellt, von denen jedes auf bestimmte Zahnkonturen vorgebogen ist, bspw. eines auf die Zähne 15 und 16 und eines auf die Zähne 43 und 44.

Die Gelenkverbindung weist in den beschriebenen Varianten ein Zahnlager, ein Teleskoplager und ein Koppelglied auf, um die Lager zur Bildung der Gelenkverbindung miteinander zu verbinden. Ein Zahnlager umfasst somit zum einen eine mechanische Anbindung an mindestens einen Zahn eines Kiefers, bspw. ein Pad, und zum anderen einen für die Ankopplung vorgesehenen Bereich. Das Teleskoplager umfasst lediglich einen für die Ankopplung vorgesehenen Bereich bzw. bildet diesen. Die Gestaltung der zur Ankopplung vorgesehenen Bereiche hängt von der Art des Koppelgliedes ab. In einem Ausführungsbeispiel ist das Koppelglied eine Schraube, die durch eine Teleskoplageröse (zur Ankopplung vorgesehener Bereich des Teleskoplagers) in eine Mutter (zur Ankopplung vorgesehener Bereich des Zahnlagers) geschraubt wird. In einem anderen Ausführungsbeispiel ist das Koppelglied ein Kugelkopfabschnitt auf einem stegartigen Kugelkopfvorsprung, der integral mit dem Zahnlager gebildet ist. Weitere Arten von Gelenkverbindungen, deren Zahnlager zur Befestigung an Zähnen des Ober- bzw. Unterkiefers ausschließlich an mesialen, distalen, bukkalen und/oder okklusalen Zahnflächen angreift, sind möglich.

Das bisher beschriebene Teleskop 3 umfasst ein Teleskoprohr 3R und eine Teleskopgleitstange 3G, die starr ist. In einer alternativen Ausführungsform ist die Teleskopstange aus konzentrischen Rohrabschnitten gebildet, die auseinander gezogen werden können.

Bisher wurde das Zahnlager 7L mit einem Pad 11 und einem Ankoppelglied 15, 17 beschrieben. In einer weiteren Ausführungsform umfasst ein Zahnlager 7L das Pad eines kieferorthopädischen Brackets, an dem eine Mutter (wie die Mutter 7LM des bisherigen Zahnlagers 7L) befestigt ist, bspw. durch Schweißen oder durch eine integrale Ausbildung von Mutter und Pad. Zur Befestigung des Pads an dem Zahn eines Patienten wird wie bei der Befestigung eines Brackets an einem Zahn vorgegangen, bspw. wie folgt: Anätzen der Klebeflächen und Aufbringen eines Klebers zwischen Zahn und Pad, ggfls. Härten mittels UV-Licht.

Auch in dieser Variante kann ein Techniker im Labor die Vorbereitung des Pads zum Ankleben desselben an einen Zahn mit Hilfe eines Gipsmodells vornehmen: Der Techniker positioniert das Pad lagegerecht relativ zum Zahn und füllt den Spalt zwischen Zahn im Gipsmodell und Padklebefläche mit einem Kunststoff auf. Ein behandelnder Arzt kann das auf diese Weise vorbereitete Pad folgend formschlüssig am entsprechenden Zahn des Patienten positionieren und festkleben, wie im Stand der Technik bekannt.

In dieser Ausführungsform können als Pad die Pads von Standard-Brackets verwendet werden, bspw. im Wesentlichen plane bzw. ebene Metallplatten. Es können aber auch halb individualisierte Pads verwendet werden, bspw. Metallplatten die mindestens eine Krümmung (um mesio-distale- und/oder okklusal-gingivale-Achse) aufweisen, die an den Zahn angepasst ist, an dem das Pad befestigt werden soll. Es können aber auch Pads verwendet werden, die vollständig individualisiert sind, d.h. formschlüssig an einen Zahn geklebt werden können, bspw. wie in EP03709055 beschrieben.

### Bezugszeichenliste

- 1: Kieferorthopädische Vorrichtung
- 3: Teleskop
- 3FE: Freies Ende eines Teleskops
- 3G: Teleskopgleitstange
- 3L: Teleskoplager
- 3LÖ: Teleskoplageröse
- 3R: Teleskoprohr
- 5: Gelenkverbindung
- 7: Zahn
- 7b: bukkale Zahnfläche
- 7d: distale Zahnfläche
- 7m: mesiale Zahnfläche
- 7o: okklusale Zahnfläche
- 7L: Zahnlager
- 7LM: Mutter des Zahnlagers
- 9: Koppelglied
- 11: Pad
- 13: Kugelgelenk
- 13A: Kugelkopfaufnahme
- 13K: Kugelkopfabschnitt
- 13V: Kugelkopfvorsprung
- 15: Ankoppelglied für UK-Zähne
- 15K: Klebeöse des Ankoppelglieds
- 15M: Mutter des Ankoppelglieds
- 17: Ankoppelglied für OK-Zähne
- 17K: Klebeöse des Ankoppelglieds
- 17M: Mutter des Ankoppelglieds
- OK: Oberkiefer
- UK: Unterkiefer

## Patentansprüche

1. Kieferorthopädische Vorrichtung (1) zur Vorverlagerung des Unterkiefers eines Patienten umfassend zwei Gelenkverbindungen (5) und zwei Teleskopen (3), welche jeweils ein Teleskoprohr (3R) und eine Teleskopgleitstange (3G) umfassen und welche mit ihren freien Enden (3FE) jeweils über eine Gelenkverbindung (5) an den Zähnen (7) des Ober- bzw. Unterkiefers (OK, UK) des Patienten befestigbar sind,
wobei jede Gelenkverbindung (5) ein Zahnlager (7L) zur Verbindung mit den Zähnen (7) umfasst,
wobei
das Zahnlager (7L) zur Befestigung an Zähnen (7) des Ober- bzw. Unterkiefers (OK, UK) an mindestens zwei, insbesondere drei, Zähnen (7) ausschließlich an mindestens einer bukkalen Zahnfläche (7b) angreifen kann und zusätzlich an einer mesialen (7m), distalen (7d) und/oder okklusalen (7o) Zahnfläche,
wobei die Teleskope (3), Gelenkverbindungen (5) und Zahnlager (7L) der Vorrichtung (1) bukkal anordnbar sind und die Vorrichtung (1) eine festsitzbare Klammer umfasst, die lingual anordnbar ist, wobei die Teleskope (3) und Gelenkverbindungen (5) physikalisch vollständig von der Klammer getrennt sind.

2. Vorrichtung nach Anspruch 1, **dadurch gekennzeichnet, dass** die Zahnlager (7L) zur Befestigung an Zähnen (7) des Ober- bzw. Unterkiefers (OK, UK) jeweils an mindestens einer und bevorzugt an mindestens zwei Zahnflächen (7m, 7d, 7b, 7o) eines jeweiligen Zahns angreifen können.

3. Vorrichtung nach Anspruch 2, **dadurch gekennzeichnet, dass** die Zahnlager (7L) zur Befestigung an Zähnen (7) des Ober- bzw. Unterkiefers (OK, UK) jeweils an mindestens einer bukkalen Zahnfläche (7b) und bevorzugt zusätzlich an mindestens einer mesialen und/oder distalen Zahnfläche (7m, 7d) eines jeweiligen Zahns (7) angreifen können.

4. Vorrichtung nach einem der vorangehenden Ansprüche, **dadurch gekennzeichnet, dass** jedes Zahnlager (7L) mindestens ein Pad (11) für mindestens einen Zahn (7) umfasst, um eine mechanische Anbindung des Zahnlagers (7L) an den jeweiligen Zahn (7) zu ermöglichen.

5. Vorrichtung nach Anspruch 4, **dadurch gekennzeichnet, dass** das Zahnlager (7L) ein Pad (11) zur Fixierung an mehreren Zähnen (7) oder alternativ an mehreren Zähnen (7) jeweils ein Pad (11), wobei die Pads (11) untereinander mechanisch verbunden sind, aufweist.

6. Vorrichtung nach einem der vorangehenden Ansprüche, **dadurch gekennzeichnet, dass** jede Gelenkverbindung (5) ein Teleskoplager (3L), ein Zahnlager (7L) und ein Koppelglied (9) zur gegenseitigen Verbindung derselben umfasst.

7. Vorrichtung nach Anspruch 6, **dadurch gekennzeichnet, dass** bei mindestens einer Gelenkverbindung (5) das Koppelglied (9) ein gesondertes Bauteil umfasst, das das Teleskoplager (3L) zur Herstellung der Gelenkverbindung (5) mit dem Zahnlager (7L) mechanisch verbindet.

8. Vorrichtung nach Anspruch 7, **dadurch gekennzeichnet, dass** bei mindestens einer Gelenkverbindung (5) das Koppelglied (9) eine Schraube umfasst, die durch eine Teleskoplageröse (3LÖ) in eine Mutter (7LM) des zugehörigen Zahnlagers (7L) greift, um die Gelenkverbindung (5) herzustellen.

9. Vorrichtung nach Anspruch 6, **dadurch gekennzeichnet, dass** bei mindestens einer Gelenkverbindung (5) das Koppelglied (9) einen integral gebildeten Abschnitt des jeweiligen Zahnlagers (7L) oder Teleskoplagers (3L) umfasst, der zur Herstellung der Gelenkverbindung (5) in einen Abschnitt des Teleskoplagers (3L) bzw. Zahnlagers (7L) steckbar ist.

10. Vorrichtung nach Anspruch 9, **dadurch gekennzeichnet, dass** bei mindestens einer Gelenkverbindung (5) das Teleskoplager (3L) eine Kugelkopfaufnahme (13A) und das Zahnlager (7L) einen Kugelkopfabschnitt (13K), insbesondere auf einem stegartigen Kugelkopfvorsprung (13V), derart aufweist, dass zur Herstellung der Gelenkverbindung (5) der Kugelkopfabschnitt (13K) lösbar in die Kugelkopfaufnahme (13A) steckbar ist.

## Claims

1. Orthodontic device (1) for forward displacement of the lower dental arch of a patient comprising two hinge joints (5) and two telescopes (3) each comprising a telescope tube (3R) and a telescope glide rod (3G) and which can be fixed with their free ends (3FE) each via a hinge joint (5) to teeth (7) of the upper and respectively lower dental arch (OK, UK) of the patient,
wherein each hinge joint (5) comprises a tooth-side bearing (7L) for connection with the teeth (7), wherein the tooth-side bearing (7L) for attachment to teeth (7) of the upper, respectively lower dental arch (OK, UK) can attach to at least two, especially three teeth (7) exclusively to at least one buccal tooth face (7b) and additionally to a mesial (7m), distal (7d) and/or occlusal (7o) tooth face, wherein the telescopes (3), hinge joints (5) and tooth side bearings (7L) of the device (1) can be arranged on buccal and the device (1) comprises a fixable brace, arrangeable on lingual, wherein the telescopes (3) and hinge joints (5) are completely physically separated from the brace.

2. Device according to claim 1, **characterized in that** the tooth-side bearing (7L) for attachment to teeth (7) of the upper, respectively, lower dental arch (OK, UK) can attach each on at least one, preferably on at least two dental faces (7m, 7d, 7b, 7o) of a respective tooth.

3. Device according to claim 2, **characterized in that** the tooth-side bearing (7L) for attachment to teeth (7) of the upper, respectively lower dental arch (OK, UK) can attach each to at least one buccal tooth face (7b) and preferably additionally on at least one mesial and/or distal tooth face (7m, 7d) of a respective tooth (7).

4. Device according to one of the preceding claims, **characterized in that** each tooth-side bearing (7L) comprises at least one pad (11) for at least one tooth (7) to allow for a mechanic joining of the tooth-side bearing (7L) to the respective tooth (7).

5. Device according to claim 4, **characterized in that** the tooth-side bearing (7L) comprises a pad (11) for fixation to several teeth (7) or alternatively on several teeth (7) one pad (11) each, wherein the pads (11) are mechanically connected to one another.

6. Device according to one of the preceding claims, **characterized in that** each hinge joint (5) comprises a telescope bearing (3L), a tooth-side bearing (7L) and a coupling member (9) for respective connection of these to one another.

7. Device according to claim 6, **characterized in that** in at least one hinge joint (5) the coupling member (9) comprises a separate construction part which connects the telescope bearing (3L) mechanically to the tooth-side bearing (7L) for generating the hinge joint (5).

8. Device according to claim 7, **characterized in that** in at least one hinge joint (5) the coupling member (9) comprises a screw which engages a nut (7LM) of the associated tooth-side bearing (7L) through a telescope bearing eye (3LÖ).

9. Device according to claim 6, **characterized in that** in at least one hinge joint (5) the coupling member (9) comprises an integrally formed section of the respective tooth-side bearing (7L) or of the telescope bearing (3L), which is pluggable into a section of the telescope bearing (3L) or of the tooth-side bearing (7L) for generating the hinge joint (5).

10. Device according to claim 9, **characterized in that** in at least one hinge joint (5) the telescope bearing (3L) comprises a ball head seat (13A) and the tooth-side bearing (7L) comprises a ball head section (13K), especially on a bridge-like ball head projection (13V) in such a manner that for generating the hinge joint (5) the ball head section (13K) is releasably pluggable into the ball head seat (13 A).

## Revendications

1. Dispositif orthodontique (1) pour faire avancer la mâchoire inférieure d'un patient comprenant deux liaisons articulées (5) et deux éléments télescopiques (3), comportant chacun un tube télescopique (3R) et une embase télescopique (3G) et qui avec leurs extrémités libres (3FE) peuvent respectivement se fixer par une liaison articulée (5) sur les dents (7) des mâchoires supérieure et inférieure (OK, UK) du patient,
dans lequel chaque liaison articulée (5) comprend un palier denté (7L) pour connexion aux dents (7),
où
le palier denté (7L), pour se fixer aux dents (7) de la mâchoire supérieure ou inférieure (OK, UK) peut mettre en prise au moins deux, en particulier trois, dents (7) exclusivement sur au moins une surface dentaire buccale (7b) et en outre sur une surface dentaire mésiale (7m), distale (7d) et/ou occlusale (7o),
dans lequel les éléments télescopiques (3), les liaisons articulées (5) et les paliers dentés (7L) du dispositif (1) peuvent être agencés de manière buccale et le dispositif (1) comprend un clip pouvant être fixé au niveau de la langue, dans lequel les éléments télescopiques (3) et les liaisons articulées (5) sont physiquement complètement séparés du clip.

2. Dispositif selon la revendication 1, **caractérisé en ce que** les paliers dentés (7L), pour se fixer aux dents (7) de la mâchoire supérieure ou inférieure (OK, UK), peuvent mettre en prise respectivement au moins une et de préférence au moins deux surfaces dentaires (7m, 7d, 7b, 7o) d'une dent respective.

3. Dispositif selon la revendication 1, **caractérisé en ce que** les paliers dentés (7L), pour se fixer aux dents (7) de la mâchoire supérieure ou inférieure (OK, UK), peuvent mettre en prise respectivement au moins une surface dentaire buccale (7b) et de préférence au moins une surface dentaire mésiale et/ou distale (7m, 7d) d'une dent respective.

4. Dispositif selon l'une des revendications précédentes, **caractérisé en ce que** chaque palier denté (7L) comporte au moins un patin (11) pour au moins une dent (7) pour permettre une liaison mécanique du palier denté (7L) avec la dent respective (7).

5. Dispositif selon la revendication 4, **caractérisé en ce que** le palier denté (7L) est un patin (11) de fixation à une pluralité de dents (7) ou alternativement comporte un patin (11) à une pluralité de dents (7), où lesdits patins (11) sont connectés les uns aux autres de façon mécanique.

6. Dispositif selon l'une des revendications précédentes, **caractérisé en ce que** chaque liaison articulée (5) comprend un palier télescopique (3L), un palier denté (7L) et un organe d'accouplement (9) pour leur raccordement mutuel.

7. Dispositif selon la revendication 6, **caractérisé en ce que** dans le cas d'au moins une liaison articulée (5), l'organe d'accouplement (9) comporte un composant séparé qui relie mécaniquement le palier télescopique (3L) pour réaliser la liaison articulée (5) avec le palier denté (7L).

8. Dispositif selon la revendication 7, **caractérisé en ce que** dans le cas d'au moins une liaison articulée (5), l'organe d'accouplement (9) comporte une vis qui s'engage dans un écrou (7L) du palier denté correspondant (7L), grâce à une patte télescopique (3LÖ), pour constituer la liaison articulée (5).

9. Dispositif selon la revendication 6, **caractérisé en ce que**, dans le cas d'au moins une liaison articulée (5), l'organe d'accouplement (9) comporte une partie solidaire du palier denté (7L) respectif ou du palier télescopique (3L), qui peut s'enficher dans une partie du palier télescopique (3L) ou du palier denté (7L) pour réaliser la liaison articulée.

10. Appareil selon la revendication 9, **caractérisé en ce que** dans le cas d'au moins un joint articulé (5), le palier télescopique (3L) comporte un réceptacle à tête sphérique (13A) et le palier denté (7L) comporte une partie à tête sphérique (13K), en particulier une saillie à rotule (13V) de telle sorte que, pour réaliser la liaison articulée (5), la partie à tête sphérique (13K) peut être enfichée de manière amovible dans le réceptacle à rotule (13A).
